# EUROPEAN PATENT APPLICATION

(11) **EP 1 413 496 A1**
(43) Date of publication of application: **28.04.2004**
(21) Application number: 03024298.6
(22) Date of filing: 23.10.2003
(51) Int. Cl.: B62B 3/06

(54) **Lifting and transportation device with a flat loading bed**

(30) Priority: 25.10.2002 IT vi20020230
(71) Applicant: ITALCARRELLI SRL, 36072 Chiampo (VI) (IT)
(72) Inventor: Negrin, Alessandro, 36072 Chiampo (VI) (IT)
(74) Representative: Terreran, Gabrio

(57) **Abstract**

The invention concerns a lifting and transportation device (1) comprising a mobile tractor (2) equipped with supply and command members (3) for a lifting group (4) of a flat loading bed (5). The flat loading bed (5) is associated with the mobile tractor (2) through vertical guides (6) suitable for preventing a horizontal translation of the flat loading bed (5) when the lifting group (3) is actuated and for ensuring a lifting-lowering parallel to the ground (S).

## Description

The invention concerns a lifting and transportation device for goods on a flatbed particularly suitable for moving pallets containing sheets of glass.

As is known, in glass production plants the end product generally consists of sheets of glass of substantial size.

Such sheets coming out from production lines are arranged on suitable metal supports called pallets which allow them to move.

To move such pallets special lifting and transportation devices are used that are able to lift loads in the order of 30 tons by a few centimetres.

Such devices, also known as lifting trucks, substantially consist of a mobile tractor on wheels comprising a frame in which the motor group and the command members of a lifting group of the flat loading bed where the load to be lifted are housed.

The lifting group consists of a plurality of leverisms of the crank-connection rod type arranged between the frame of the tractor and the flat lifting surface, which ensure the parallelism with respect to the base of the flat loading bed.

Such leverisms are actuated through suitable mechanical or oleodynamic actuators suitably attached to the frame of the tractor and to the levers, commanded by the command group.

A first drawback of such devices consists of the fact that the flat lifting surface, when it is actuated, as well as lifting or lowering, displaces horizontally forwards or backwards due to the type of leverisms used.

Another drawback linked to the previous one consists of the fact that the operator must consider such a horizontal displacement in order to correctly carry out the loading or unloading of goods into/from the desired place.

This makes this operation particularly complex and delicate, above all considering the product transported.

To solve such a drawback, the prior art has proposed devices in which the lifting members consist of a plurality of hydraulic pistons anchored to the frame of the tractor, and having the mobile stem connected directly to the flat loading bed.

Such oleodynamic pistons are generally four in number, arranged near to the vertices of the flatbed and actuated selectively and in a coordinated manner by the command group to ensure the parallelism with respect to the base of the flatbed.

More precisely, to ensure the aforementioned parallelism the command group is equipped with detector means of the position with respect to the base of the flatbed, generally consisting of linear encoders the signals of which are processed by a suitable processing unit to suitably command each piston.

In such a case to move the load the operator must simply lower the flat loading bed and arrange it on the lower recess of the pallet.

Then, through the command members, he actuates the pistons which take care of lifting the flatbed vertically.

Finally, when it has reached its destination, the flat loading bed lowers resting the pallet on the ground and the flatbed extracts from the aforementioned recess in preparation for the subsequent moving operation.

A first drawback of such devices consists of the fact that in the case of failure of one of the pistons or of the relative command members the parallelism of the flat loading bed is not ensured.

In such a case, indeed, the safety valves intervene which block the failed piston in the position assumed at the time of breaking thus ensuring that the load does not unbalance and is not lost.

On the other hand, this prevents the operator from depositing the load and proceeding to the necessary repair operations of the device.

In such a situation the operator must make use of a crane or analogous devices which allow the load to be lifted and the flatbed to be freed to allow access to the pistons and to carry out the necessary repairs and checks.

Another limit consists of the fact that the parallelism of the flatbed is ensured electronically by the processing unit. As is known, in such types of devices it is indeed preferable to have mechanical safety that is more reliable and safe with respect to electronic safety.

The purpose of the present invention is to overcome said drawbacks.

In particular, a first purpose of the invention is to realise a lifting and transportation device which in the case of failure allows the load to be deposited in a controlled and safe manner to proceed to the necessary maintenance and repair operations.

Another purpose is to realise a device which has a flat loading bed that is always parallel to the ground even in the case of failure.

A further purpose is to realise a lifting and transportation device which has a flat loading bed which does not translate horizontally in the lifting or lowering step of the flatbed itself.

Another purpose is to realise a reliable and safe device which allows the point of unloading of the pallet to be precisely determined.

The last but not least purpose is to realise a device that is particularly simple and useable even by non-expert operators.

Said purposes are accomplished by a lifting and transportation device which in accordance with the main claim comprises a mobile tractor equipped with supply and command members for a lifting group of at least one flat loading bed characterised in that said flat loading bed is associated with said tractor through vertical guides suitable for preventing a horizontal translation of said flatbed when said lifting group is actuated and for ensuring a lifting-lowering substantially parallel to the ground.

Advantageously the proposed device mechanically ensures the parallelism of the flat loading bed to the round in whatever working situation.

This makes the device reliable and safe in whatever circumstance even in the case of failure.

Said purposes and advantages shall become clearer during the description of a preferred embodiment, given for indicating and not limiting purposes, with reference to the attached tables of drawings, where:
- figure 1 represents an axonometric view of the lifting and transportation device object of the present invention;
- figure 2 represents a side view of a longitudinal section of the device of figure 1 with the flatbed lowered;
- figure 3 represents side view of a longitudinal section of the device of figure 1 with the flatbed raised;
- figure 4 represents a partially sectioned plan view of the device of figure 1;
- figure 5 represents a side section view of some constituent elements of the device of figure 1 in a first working configuration;
- figure 6 represents a side section view of the elements of figure 5 in another working position.

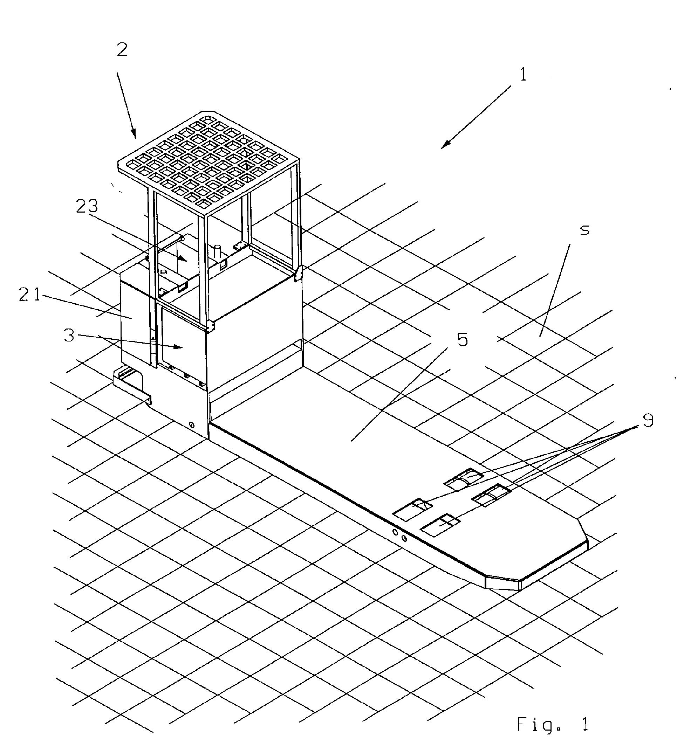

The lifting and transportation device object of the present invention is represented in figure 1 where it is wholly indicated with reference numeral 1.

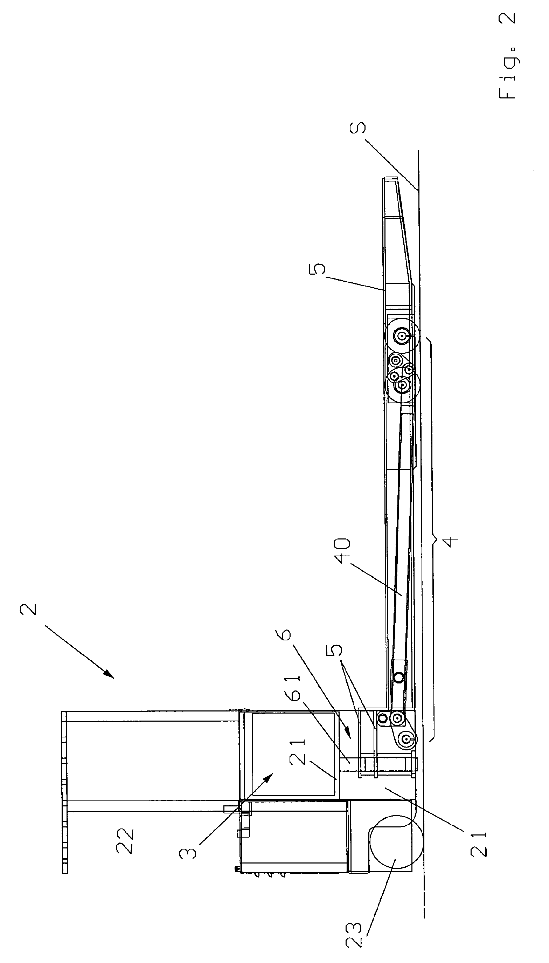

It comprises a mobile tractor 2 consisting of a frame 21 in which supply and command members 3 of a lifting group 4 are housed, represented in detail in figures 2 to 6, suitable for lifting/lowering a flat loading bed 5.

The tractor 2 is also equipped with the operating cab 22, the motor group, not represented and drive wheels 23 which make the device 1 self-propelled.

The invention foresees that the flat loading bed 5 be associated with the tractor 2 through vertical guides 6, suitable for preventing a horizontal translation of the flatbed 5 when the lifting group 4 is actuated and for ensuring a lifting-lowering parallel to the ground S.

Such vertical guides 6 consist of a pair of vertical stems 61 connected to the frame 21 of the tractor 2, with which the flatbed 5 is slidably coupled.

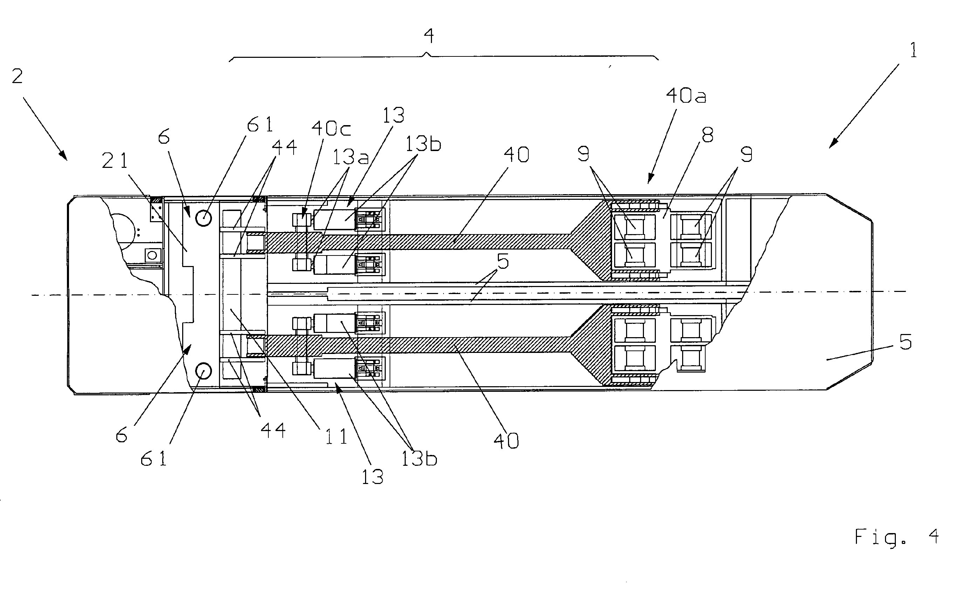

The lifting group 4 comprises a pair of adjacent connecting rods 40, visible in figures 4, 5 and 6, each equipped at one end 40a with a first articulation pin 41 with which a first crank 42 is coupled and at the other end 40b with a second articulation pin 43 with which a second crank 44 is coupled.

The first crank 42 is also pivoted on a first shaft 7 connected to the truck 8 of the idle wheels 9 for resting down the device and is connected through a hinge-type attachment to the flatbed 5 through the support pin 10.

The truck 8 is associated with the frame 21 of the tractor 2 through coupling members, not visible, consisting of horizontal linear guides which allow it to freely translate horizontally.

In particular, such a translation is realised with a system with bearings housed in rails connected to the frame 21 of the tractor 2.

As far as the second crank 44 is concerned, it is fitted onto a torsion shaft 11 rotatably coupled on bushes connected to the frame 21, which extends transversally to the flatbed 5 and connects the two connecting rods 40 together.

Each connecting rod 40 is also equipped with a support bracket 45 arranged near to the end 40b, equipped with a pin 45a which constitutes the second resting point of the flatbed 5 on the connecting rod 40.

In particular, between the bracket 45 and the flatbed 5 coupling members consisting of horizontal linear guides, analogous to the previous ones and wholly indicated with reference numeral 12 are arranged.

More precisely, they consist of a bearing 12a coupled with the pin 45a, which slides on a rail connected to the flatbed 5.

Each connecting rod 40 is actuated by an actuator group consisting of a pair of hydraulic pistons 13, visible in figure 4, having the stem 13a pivoted on the eye 40c of the connecting rod 40 and the cylinder 13b anchored with a hinge-type attachment on the flatbed 5.

Each piston 13 is commanded by the operator through the aforementioned command and supply members 3 substantially consisting of a hydraulic unit and of the relative known distribution systems, not represented.

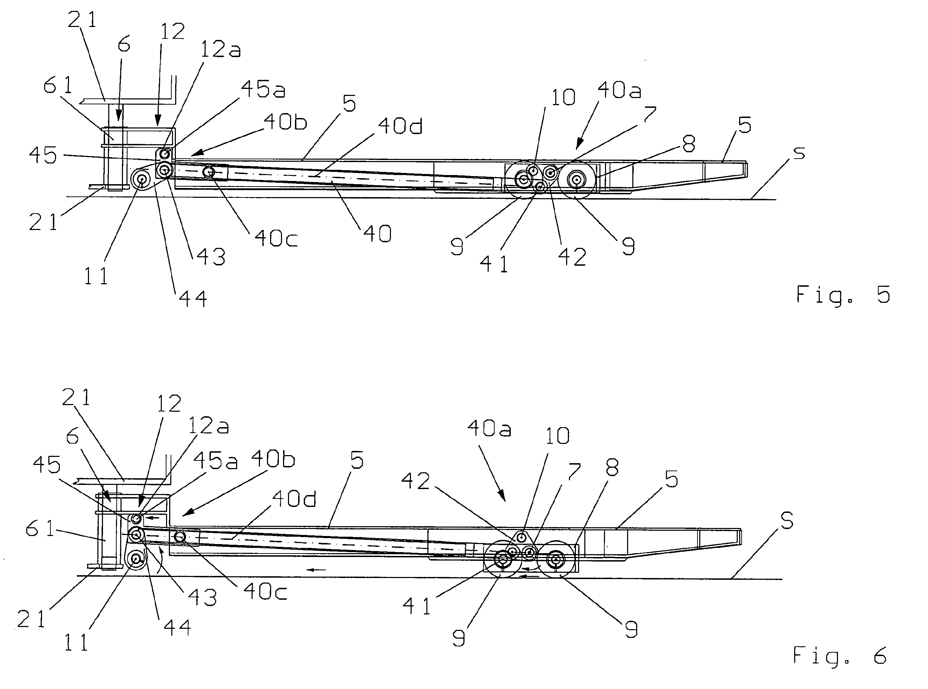

To carry out a movement the operator must first act upon the command members 3 to lower the flatbed 5, taking the leverisms of the lifting group 4 into the configuration represented in figures 2 and 5 and then move the tractor 2 until the flatbed 5 is arranged on the determined lower recess of the pallet to be moved.

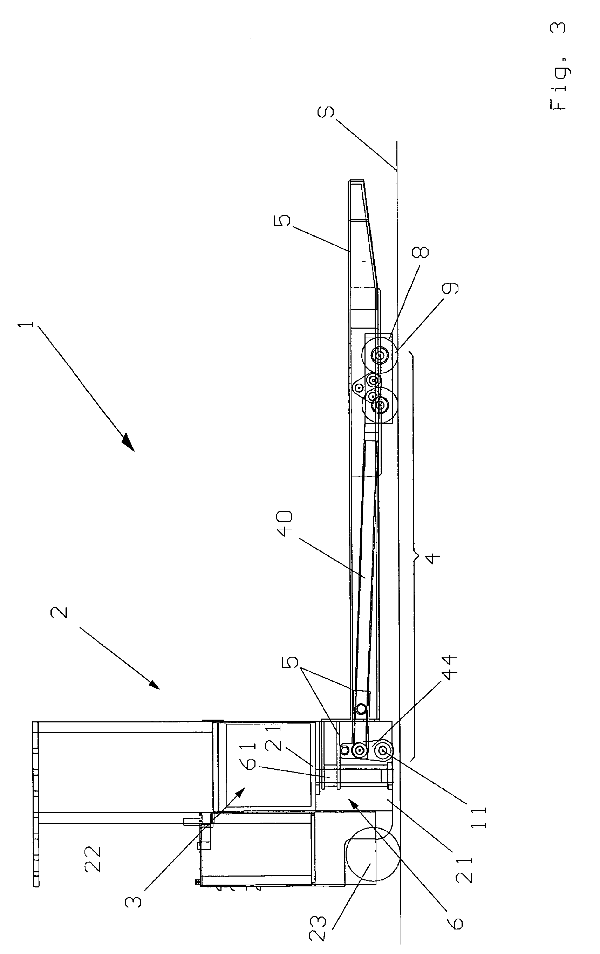

Then, through the command members 3 he actuates the pistons 13 which takes care of arranging the leverisms 4 in the configuration represented in figures 3 and 6, thus obtaining the lifting of the load.

In particular each piston 13, thrusting upon the eye of the connecting rod 40c, makes the first crank 42 rotate in a clockwise direction until the axis 40d of the connecting rod 40 is aligned with the centre of the pin 41 and of the shaft 7, lifting the pin 10 whereas the second crank 44 rotates in the anti-clockwise direction thus lifting the bracket 45 and therefore the flatbed 5.

At the same time, the truck 8 of the idle wheels 9 and the resting point on the bearing 12a displace horizontally along the horizontal guides, moving slightly backwards thus ensuring that the flatbed 5 can move only vertically along the vertical guides 6.

It is important to note that the torsion shaft 11 allows possible unbalancing of the load on the flatbed 5 to be counterbalanced, transmitting a torque proportional to the difference in force required to lift the load to each connecting rod 40.

Finally, when the destination has been reached, the operator lowers the flat loading bed 5 placing the pallet on the ground S and removes the flatbed 5 from the aforementioned recess in preparation for the subsequent moving operation.

In the case of failure or malfunction of the hydraulic unit, the device foresees that the operator can remove pressure from the pistons 13. In such a case, during the lowering of the load, the parallelism of the flatbed 5 with respect to the ground S is ensured mechanically by the vertical guides.

This allows the flatbed 5 to be extracted from the pallet and allows the operator to proceed to the necessary repairs without compromising the load which lowers gently and parallel to the ground S.

Advantageously, the device is made with cranks having the coupling points with the respective connecting rods arranged geometrically in such a way that when the flat loading bed 5 is lifted the lifting group 4 is not engaged.

This advantageously allows the lifting levers to be disengaged during transportation, reducing the probability of breaking.

An unrepresented variant embodiment differs from the previous one in that the lifting group consists of a conventional system, described previously consisting of oleodynamic pistons connected directly to the flatbed and to the frame 21.

It should also be observed that the actuators used can be of whatever type.

From that which has been stated it is clear how the device described achieves said purposes.

Although the invention has been described with reference to the attached tables of drawings, it can undergo modifications in the embodying step, all of which are covered by the same inventive concept expressed by the claims listed hereafter and therefore protected by the present patent.

## Claims

1. Lifting and transportation device (1) comprising a mobile tractor (2) equipped with supply and command members (3) for a lifting group (4) of at least one flat loading bed (5) **characterised in that** said flat loading bed (5) is associated with said mobile tractor (2) through vertical guides (6) suitable for preventing a horizontal translation of said flat loading bed (5) when said lifting group (3) is actuated and for ensuring a lifting-lowering substantially parallel to the ground (S).

2. Device (1) according to claim 1) **characterised in that** said lifting group (3) comprises at least one actuator group of at least one connecting rod (40) equipped with a first articulation pin (41) with which at least one first crank (42) is associated, said at least one first crank (42) being pivoted on a first shaft (7) connected to at least one truck (8) equipped with idle wheels (9) for resting upon the ground (S) and being connected through a hinge-type attachment to said at least one flatbed (5) through at least one support pin (10).

3. Device (1) according to claim 2) **characterised in that** said at least one first crank (42) is arranged at an end (40a) of said at least one connecting rod (40).

4. Device (1) according to claim 2) or 3) **characterised in that** said at least one truck (8) is associated with the frame (21) of said tractor (2) through coupling members which allow it to freely translate horizontally during the lifting-lowering of said at least one flatbed (5).

5. Device (1) according to any one of claims 2) to 4) **characterised in that** said at least one connecting rod (40) is equipped with a second articulation pin (43) with which a second crank (44) is associated, fitted on a shaft rotatably coupled on bushes connected to the frame (21) of said mobile tractor (2).

6. Device (1) according to claim 5) **characterised in that** said shaft consists of a torsion shaft (11) which connects said connecting rods (40) together, suitable for counterbalancing possible unbalancing of the load on said at least one flatbed (5).

7. Device (1) according to claim 5) or 6) **characterised in that** said at least one second crank (44) is arranged at one end (40b) of said at least one connecting rod (40).

8. Device (1) according to any one of claims 2) to 7) **characterised in that** said at least one connecting rod (40) is also equipped with at least one support bracket (45) equipped with a pin (45a) for resting down said at least one flatbed (5).

9. Device (1) according to claim 8) **characterised in that** between said at least one bracket (45) and said at least one flatbed (5) coupling members are arranged suitable for allowing mutual free horizontal sliding during the lifting-lowering of said at least one flatbed (5).

10. Device (1) according to claim 4) or 9) **characterised in that** said coupling members are horizontal linear guides (12)

11. Device according to claim 10) **characterised in that** said horizontal linear guides (12) comprise at least one bearing (12a) which slides on a rail.

12. Device (1) according to any one of claims 2) to 11) **characterised in that** said at least one connecting rod (40) is actuated by an actuator group.

13. Device according to claim 12) **characterised in that** said actuator group comprises at least one hydraulic piston (13), commanded by said supply and command members (3), having the mobile stem (13a) pivoted in the eye (40c) of said at least one connecting rod (40) and the cylinder (13b) anchored with a hinge-type attachment on said at least one flat loading bed (5).

14. Device (1) according to any one of claims 2) to 13) **characterised in that** said at least one connecting rod (40) are two in number arranged longitudinally adjacent to each other.

15. Device according to claim 1) **characterised in that** said lifting group (4) comprises at least one actuator group connected directly to said at least one flatbed (5) and to the frame (21) of said at least one tractor (2)

16. Device according to claim 15) **characterised in that** said actuator group comprises at least one oleodynamic piston commanded by said supply and command members (3).

17. Device (1) according to any one of the previous claims **characterised in that** said mobile tractor (2) is equipped with at least one operating cab (22), and houses at least one motor group which actuates at least one drive wheel (23).

18. Device (1) according to any one of the previous claims **characterised in that** said vertical guides (6) comprise at least one vertical stem (61), connected to the frame (21) of said mobile tractor (2), with which said flat loading bed (5) is slidably coupled.

19. Lifting and transportation device (1) substantially as described with reference to the attached drawings.
